# EUROPEAN PATENT SPECIFICATION

(11) **EP 4 475 279 B1**
(45) Date of publication and mention of the grant of the patent: **28.10.2026**
(21) Application number: 23783289.4
(22) Date of filing: 23.05.2023
(51) Int. Cl.: H01M 10/655, H01M 10/613, H01M 50/507, H01M 50/264, H01M 50/258, H01M 50/503, H01M 50/516, H01M 50/293, H01M 50/522, H01M 50/213

(54) **CCS ASSEMBLY AND BATTERY PACK**
CCS-ANORDNUNG UND BATTERIEPACK
ENSEMBLE CCS ET BLOC-BATTERIE

(30) Priority: 24.04.2023 CN 202310456346; 24.04.2023 CN 202320963943 U; 24.04.2023 CN 202320963926 U
(43) Date of publication of application: 11.12.2024
(73) Proprietor: Eve Energy Co., Ltd., Huizhou, Guangdong 516006 (CN)
(72) Inventor: LAN, Han, Huizhou, Guangdong 516006 (CN)
(74) Representative: Murgitroyd & Company
(86) International application number: PCT/CN2023/095745
(87) International publication number: WO 2024/221520

(56) References cited:
- WO-A1-2021/253357
- WO-A1-2023/001263
- CN-A- 107 968 171
- CN-A- 113 300 036
- CN-A- 114 976 503
- CN-U- 217 788 725
- CN-U- 218 039 700
- CN-U- 218 041 208

## Description

### TECHNICAL FIELD

The present disclosure relates to the field of battery technologies, and in particular, to cell contact system (CCS) assemblies and battery packs.

### BACKGROUND

During the application process, batteries need to cooperate with a battery management system (BMS) to collect temperature and pressure signals to realize a battery management. A battery pack in related art mostly use a cell contact system (CCS) assembly for series and parallel connection of single batteries in the battery pack and for collections of the temperature and pressure signals.

A conventional CCS assembly includes components such as a busbar, a bracket, and a collection wiring harness. When in operation, the components such as the busbar and the collection wiring harness are mostly integrated on the bracket. After assembled into the battery pack, glue is usually poured over the entire CCS assembly to attach the components such as aluminum bars and the collection wiring harness to the bracket.

An upper surface of the bracket in the related art is provided with an upper accommodating groove configured to accommodate the busbar. When pouring glue, the glue is directly poured over the busbar, and the glue flows to a gap between the busbar and the upper accommodating groove to realize bonding and fixing of the two. However, a glue irrigation area of this fixing method is large, the time for the glue to flow to the gap between the busbar and the upper accommodating groove is long, the production costs is high, and the bonding efficiency is low.

WO2023001263A1 discloses a battery and electrical apparatus. CN114976503A discloses a CCS assembly, battery module structure and battery. CN218039700U discloses a battery signal wire harness acquisition assembly and battery module.

### SUMMARY OF THE INVENTION

Aiming at the deficiencies of the related art, a first object of the present disclosure is to provide a CCS assembly that is easy to bond and requires less glue.

A second object of the present disclosure is to provide a battery pack with high safety and low costs.

According to the present disclosure, a CCS assembly is provided, including busbars; a plastic bracket, having an upper surface provided with upper accommodating grooves configured to accommodate the busbars, having a lower surface provided with lower accommodating grooves configured to accommodate single batteries, and the upper accommodating grooves communicating with the lower accommodating grooves to make the busbars abut against the single batteries; glue guiding grooves, disposed on the upper surface of the plastic bracket, and each of the glue guiding grooves communicating with the upper accommodating grooves adjacent thereto.

In the present disclosure, the busbars include an input bar, current guide bars, series connection bars, and an output bar, all of which are correspondingly embedded in the upper accommodating grooves; the current guide bars cooperate with the input bar and the output bar to connect every two adjacent ones of the single batteries in series in a first direction, and to connect two adjacent ones of the single batteries in parallel in a second direction; current guide groups each including a plurality of the current guide bars connected in series along the first direction are defined, and each of the series connection bars is configured to connect two adjacent ones of the current guide groups arranged along the second direction in series; and the glue guiding groove each of the glue guiding grooves extends along the first direction.

In the present disclosure, the CCS assembly further includes collection wiring harnesses, input ends of the collection wiring harnesses are electrically connected to the busbars or the single batteries; wiring harness grooves each extending along the first direction are provided on the plastic bracket, the collection wiring harnesses are embedded in the wiring harness grooves, and the wiring harness grooves are arranged in one-to-one correspondence with the current guide groups; and the wiring harness grooves are arranged adjacent to the glue guiding grooves, and each of the wiring harness grooves communicates with the glue guiding grooves adjacent thereto.

In some embodiments, a height of a bottom inner surface of each of the glue guiding grooves is not lower than a height of a bottom inner surface of each of the wiring harness grooves.

In some embodiments, each of the wiring harness grooves is provided with a glue discharge hole running through a bottom thereof.

In some embodiments, branch grooves are provided on the upper surface of the plastic bracket, an extending direction of each of the branch grooves is arranged at an included angle with an extending direction of each of the wiring harness grooves; each of the branch grooves is configured to communicate with a corresponding one of the wiring harness grooves and one of the upper accommodating grooves corresponding to the corresponding one of the wiring harness grooves, collection single wirings of the collection wiring harnesses extend to the upper accommodating grooves corresponding to the collection wiring harnesses through the branch grooves; and a height of a bottom inner surface of each of glue guiding grooves is not lower than a height of a bottom inner surface of each of the branch grooves.

In some embodiments, a height of a bottom inner surface of each of the upper accommodating grooves is not higher than the height of the bottom inner surface of each of the branch grooves; and the height of the bottom inner surface of each of the upper accommodating grooves is not higher than the height of the bottom inner surface of each of the glue guiding grooves.

In some embodiments, both sides of each of the current guide groups along the first direction are provided with the glue guiding grooves.

In some embodiments, each of the upper accommodating grooves includes a plurality of first grooves arranged along the first direction, each of the first grooves includes at least two installation areas arranged at intervals in the second direction, and two adjacent ones of the installation areas are communicated with each other through a second groove; and at least one of the glue guiding grooves is arranged between the two adjacent ones of the installation areas and communicates with the second groove.

In some embodiments, an output end of the plastic bracket is provided with leading wire notches corresponding to the wiring harness grooves one by one, each of the leading wire notches communicates with a corresponding one of the wiring harness grooves, and the collection wiring harnesses protrude from the wiring harness grooves by passing through the leading wire notches; the CCS assembly further includes sealing buckles disposed on the plastic bracket and configured to seal the leading wire notches; and the collection wiring harnesses protrude from the wiring harness grooves by passing through the sealing buckles.

In some embodiments, each of the sealing buckles includes a base plate, a limiting plate, and a connecting block, and the base plate is connected with the limiting plate through the connecting block; the connecting block is clamped in one of the leading wire notches, the limiting plate is located inside the output end of the plastic bracket, and the base plate is located outside the output end of the plastic bracket; and the base plate is provided with a wire hole, and one of the collection wiring harnesses protrudes from one of the wiring harness grooves through the wire hole.

In some embodiments, the plastic bracket includes a main body and a wire hardness tray disposed on the output end of the plastic bracket, the wiring harness grooves, the upper accommodating grooves, and the lower accommodating grooves are all disposed on the main body; the wire hardness tray includes a horizontal plate and a longitudinal plate connected with each other, the longitudinal plate is connected to an output end of the main body, and the horizontal plate is disposed on a side of the longitudinal plate away from the main body; the leading wire notches are opened on the longitudinal plate, and the longitudinal plate is located between the base plate and the limiting plate; and the base plate is provided with a wire hole through which one of the collection wiring harnesses protrudes out of one of the wiring harness grooves and extends into an area corresponding to the horizontal plate.

In some embodiments, the CCS assembly further includes cable ties configured to bind the collection wiring harnesses in the area corresponding to the horizontal plate; a lower surface of the horizontal plate is provided with a plurality limiting protrusions every two of which arranged in groups, an area between the every two of the limiting protrusions defines a limiting groove configured to limit one of the cable ties, and the one of the cable ties is located in the limiting groove; and the horizontal plate is provided with first binding holes each running through the horizontal plate and each configured to thread one of the cable ties.

In some embodiments, the CCS assembly further includes cable ties and fixing buckles, which are all configured to fix the collection wiring harness in the area corresponding to horizontal plate; each of the fixing buckles includes two binding buckles correspondingly arranged, one of which is arranged on the horizontal plate, and the other one is arranged on the horizontal plate or the longitudinal plate; the two binding buckles have one of the collection wiring harnesses located therebetween; and each of the binding buckles includes a base, and a second binding hole runs through the base and configured to thread one of the cable ties.

In some embodiments, the horizontal plate is provided with forming ports each running through the horizontal plate and each corresponding to one of the binding buckles.

In some embodiments, wiring pressing strips are provided at each of the wiring harness grooves; the collection wiring harnesses are located between bottoms of the wiring harness grooves and the wiring pressing strips; and the collection wiring harnesses include a plurality of collection single wirings, each of the wiring pressing strips is provided with a through groove configured for the collection single wirings to enter the wiring harness grooves.

In some embodiments, a width of the through groove is greater than or equal to an outer diameter of each of the collection single wirings.

In some embodiments, a length direction of the through groove and an extending direction of each of the wiring harness grooves are arranged at an included angle.

In some embodiments, the included angle between the length direction of the through groove and the extending direction of each of the wiring harness grooves ranges from 10° to 80°.

In some embodiments, a plurality of rib plates are provided between the longitudinal plate and a bottom surface of the main body.

According to another aspect of the present disclosure, a battery pack is provided, including the above-mentioned CCS assembly.

The technical solutions of the embodiments of the present disclosure have at least the following advantages and beneficial effects.

The present disclosure adopts the glue guiding grooves to drain the glue, which may accurately drain the glue into the gap between the busbars and the upper accommodating grooves, as well as the gap between the single batteries and the lower accommodating grooves, thereby preventing the glue from being coated on the upper surface of the busbars and other irrelevant areas of the plastic bracket, improving the bonding efficiency, reducing the amount of the glue on the premise of ensuring the bonding strength, and saving production costs.

### DESCRIPTION OF DRAWINGS

FIG. 1 is a schematic structural view of a battery pack provided in Embodiment 1 of the present disclosure;
FIG. 2 is a schematic view of an exploded structure of a CCS assembly provided in Embodiment 1 of the present disclosure;
FIG. 3 is a partial enlarged schematic view of a structure at A in FIG. 2;
FIG. 4 is a partial enlarged schematic view of a structure at B in FIG. 2;
FIG. 5 is a schematic view of a three-dimensional structure of a CCS assembly provided in Embodiment 1 of the present disclosure;
FIG. 6 is a partial enlarged schematic view of a structure at C in FIG. 5;
FIG. 7 is a schematic view of a three-dimensional structure of a sealing buckle provided in Embodiment 1 of the present disclosure;
FIG. 8 is a schematic top view of a CCS assembly provided in Embodiment 1 of the present disclosure;
FIG. 9 is a schematic bottom view of a CCS assembly provided in Embodiment 1 of the present disclosure;
FIG. 10 is a schematic view of an exploded structure of a CCS assembly provided in Embodiment 2 of the present disclosure;
FIG. 11 is a partial enlarged schematic view of a structure at D in FIG. 10;
FIG. 12 is a schematic view of a first three-dimensional structure of a CCS assembly provided in Embodiment 2 of the present disclosure;
FIG. 13 is a partial enlarged schematic view of a structure at E in FIG. 12;
FIG. 14 is a schematic view of a second three-dimensional structure of a CCS assembly provided in Embodiment 2 of the present disclosure.

### SPECIFIC EMBODIMENTS

In the description of the present disclosure, it should be noted that, orientations or positional relationships indicated by the terms "upper", "lower", "front", "rear", "left", "right", "vertical", "horizontal", "top", "bottom", "inner", "outer", etc. are based on the orientations or positional relationships illustrated in the attached drawings, and are only for the convenience of describing the present disclosure and simplifying the description, rather than indicating or implying that the referred devices or elements have certain orientations, or are constructed or operated in certain orientations, and thus should not be construed as limitations on the present disclosure.

In the description of the present disclosure, unless otherwise clearly stipulated and limited, the terms "first" and "second" are only configured for the purpose of description, and cannot be understood as indicating or implying relative importance. The term "plurality" means two or more. The term "and/or" includes any and all combinations of one or more of the associated listed items. In particular, references to "the" object or "an/a" object are likewise intended to represent one of several such objects that may be possible.

Furthermore, in the description of the present disclosure, it should be understood that the referenced orientation terms such as "on", "below", "inside", and "outside" are described from the perspective illustrated in the drawings, should not be construed as a limitation to specific embodiments. It also needs to be understood that in the context, when a component or feature is referred to as being "on" "below", "inside", or "outside" another component(s), it cannot only be directly connected "on" "below", "inside", or "outside" another (one or more) components, it can also be indirectly connected "on" "below", "inside", or "outside" another (one or more) components through intermediate components.

### Embodiment 1

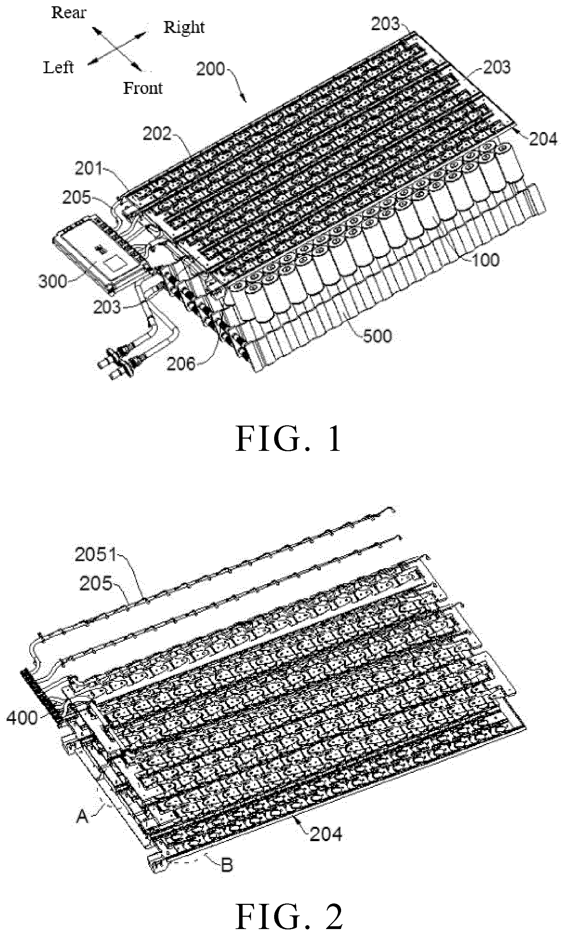

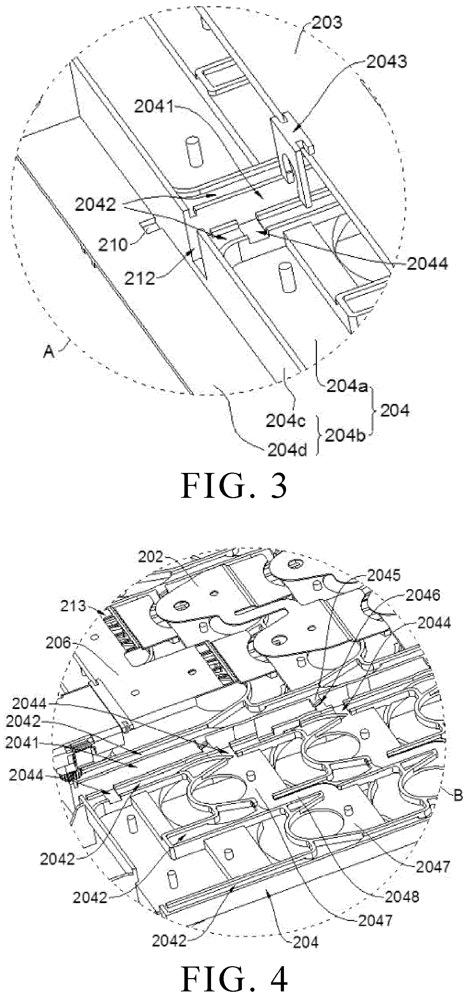

Referring to FIG. 1 to FIG. 9, a CCS assembly 200 should be configured as cylindrical power battery modules, including busbars, a plastic bracket 204, and glue guiding grooves 2042. Herein, an upper surface of the plastic bracket 204 is provided with upper accommodating grooves configuration to accommodate the busbars, a lower surface of the plastic bracket 204 is provided with lower accommodating grooves 214 configured to accommodate the single batteries 100 of the cylindrical power battery modules, and the upper accommodating groove and the lower accommodating groove 214 communicate with each other to make the busbars abut against the single batteries 100. The glue guiding grooves 2042 are arranged on the upper surface of the plastic bracket 204, and each of the glue guiding grooves 2042 communicates with the upper accommodating groove adjacent thereto. In an embodiment, as illustrated in FIG. 3 and FIG. 4, the plastic bracket 204 here includes a main body 204a and a wiring harness tray 204b disposed at an output end of the main body 204a. The upper accommodating grooves and the lower accommodating grooves 214 are all arranged on the main body 204a. The main body 204a here has a plate shape. A shape of the upper accommodating groove is adapted to a shape of the busbar. When in operation, the busbars are first assembled into the upper accommodating grooves, and the plastic bracket 204 is attached to the single batteries 100, that is to say, the single batteries 100 are assembled into the lower accommodating grooves 214, and then glue is poured into the glue guiding grooves 2042, and the glue in the glue guiding grooves 2042 flows along the glue guiding grooves 2042 to the upper accommodation grooves at this time, that is, the glue in the glue guiding grooves 2042 flows along the glue guiding grooves 2042 to a gap between the busbars and the upper accommodation grooves, so as to realize the bonding and fixing of the busbar and the plastic bracket 204. At the same time, because the upper accommodating grooves and the lower accommodating grooves 214 are communicated, excess glue in the upper accommodating grooves flows to a gap between the lower accommodating grooves 214 and the single batteries to realize bonding and fixing between the plastic bracket 204 and the single batteries 100. In this embodiment, a bonding strength between the busbar and the plastic bracket 204 depends on a bonding area between the busbar and the upper accommodating groove, and a bonding strength between the plastic bracket 204 and the single battery 100 depends on a bonding area between the plastic bracket 204 and the single battery 100. Therefore, compared with a conventional glue pouring method, this embodiment adopts the glue guiding grooves 2042 to drain the glue, which may accurately drain the glue into the gap between the busbars and the upper accommodating grooves, as well as the gap between the single batteries 100 and the lower accommodating grooves 214, thereby preventing the glue from being coated on the upper surface of the busbars and other irrelevant areas of the plastic bracket 204, improving the bonding efficiency, reducing the amount of the glue on the premise of ensuring the bonding strength, and saving production costs.

The above-mentioned glue is a heat-conducting gel, which realizes the fixing between the components of the CCS assembly 200 and the fixing between the CCS assembly 200 and the single battery 100, and at the same time improves a heat dissipation efficiency of the battery.

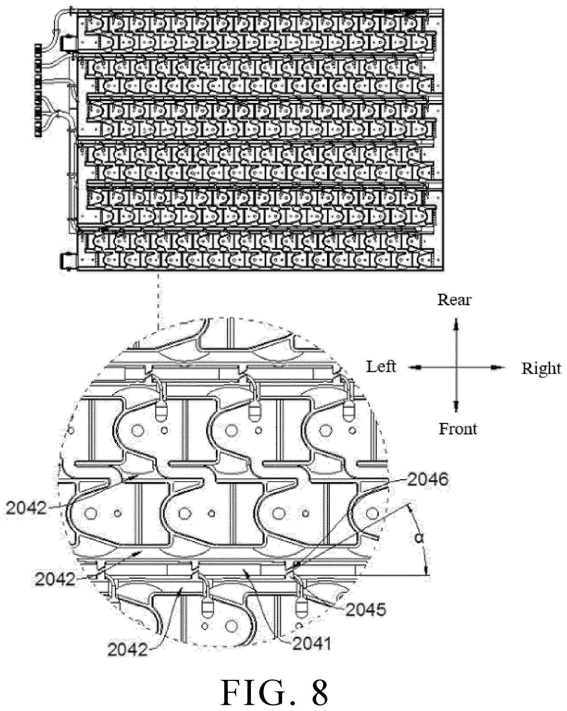

As illustrated in FIG. 1 and FIG. 8, the busbars include an input bar 201, current guide bars 202, series connection bars 203, and an output bar 206. All of the input bar 201, the current guide bars 202, the series connection bars 203, and the output bar 206 are correspondingly embedded in the upper accommodating grooves. The current guide bars 202 cooperate with the input bar 201 and the output bar 206 to connect every two adjacent single batteries 100 arranged in a first direction in series; and the current guide bars 202 cooperate with the input bar 201 and the output bar 206 to connect every two adjacent single batteries 100 arranged in a second direction in parallel. That is, the current guide bars 202 are configured to cooperate with the input bar 201 and the output bar 206 to connect every two adjacent single batteries 100 arranged along the first direction in series and connect every two adjacent single batteries 100 arranged along the second direction in parallel. A plurality of current guide bars 202 connected in series along the first direction are defined as a current guide group, and each of the series connection bars 203 is configured to connect two adjacent current guide groups arranged along the second direction in series. The glue guiding groove 2042 extends along the first direction. In this embodiment, the first direction is the left-right direction, and the second direction is the front-rear direction. Furthermore, the cylindrical power battery in this embodiment is composed of six cylindrical power battery modules arranged in series in the front-rear direction, that is, in the second direction. Each single cylindrical power battery module includes a plurality of single batteries 100 connected in series in the left-right direction, that is, in the first direction, multiple single batteries 100 connected in series in the left-right direction is defined as a battery row, and each cylindrical power battery module includes two battery rows connected in parallel in the front-rear direction. The current guide bar 202 here is configured to connect two adjacent single batteries 100 arranged in the left-right direction in series, and connect two adjacent single batteries 100 arranged in a same cylindrical power battery module and in the front-rear direction in parallel. The series connection bar 203 is configured to connect two adjacent cylindrical power battery modules in series. Electrical connections between the single batteries 100 of the cylindrical power battery modules and the input bar 201, the current guide bars 202, the series connection bars 203, and the output bar 206, and assembly modes of the input bar 201, the current guide bars 202, the series connection bars 203, and the output bar 206 fitted with the plastic bracket 204 belong to related art, and will not be repeated here. A structure of the glue guiding groove 2042 extending along the first direction enables the same glue guiding groove 2042 to connect multiple upper accommodation grooves in series in the first direction, that is, in the left-right direction, which is beneficial to improve the efficiency of glue filling and bonding.

As illustrated in FIG. 2, FIG. 4, and FIG. 8, the CCS assembly 200 further includes collection wiring harnesses 205. An input end of the collection wiring harness 205 is electrically connected to the busbar or the single batteries 100. Wiring harness grooves 2041 each extending along the first direction are provided on the plastic bracket 204. The collection wiring harness 205 is embedded in the wiring harness groove 2041, and the wiring harness grooves 2041 are arranged in one-to-one correspondence with the current guide groups. The wiring harness grooves 2041 are arranged adjacent to the glue guiding grooves 2042, and the wiring harness groove 2041 communicates with the glue guiding groove 2042 adjacent thereto. In this embodiment, the input end of the collection wiring harness 205 is connected to at least one of the input bar 201, the output bar 206, the current guide bar 202, the series connection bar 203, and the single battery 100. In this embodiment, a number of the collection wiring harnesses 205 is six, which are set in one-to-one correspondence with the six cylindrical power battery modules. In this embodiment, the collection single wirings 2051 that make up the collection wiring harness 205 are welded to the busbar of the cylindrical power battery module corresponding to the collection wiring harness 205, so as to realize a comprehensive monitoring of temperature and pressure signals of the cylindrical power battery module. The wiring harness groove 2041 here facilitates the wiring of the collection single wirings 2051 that forming the collection wiring harness 205, which may avoid winding and knotting of each collection single wiring 2051 during a welding process of the collection single wiring 2051 and the busbar, which is conducive to improving work efficiency. At the same time, by housing the collection wiring harnesses 205 in the wiring harness grooves 2041, an auxiliary fixing of the collection wiring harnesses 205 may be realized before coating the glue, and the glue in the glue guiding grooves 2042 may flow into the wiring harness grooves 2041 to realize the fixing of the collection wiring harnesses 205 during a glue coating stage, which may effectively improve a fastness of the fixing of the collection wiring harnesses 205. Furthermore, a structural design of the wiring harness grooves 2041 may reduce a thickness of the CCS assembly 200, which is conducive to reducing a volume of the cylindrical power battery and improving an energy density of the cylindrical power battery.

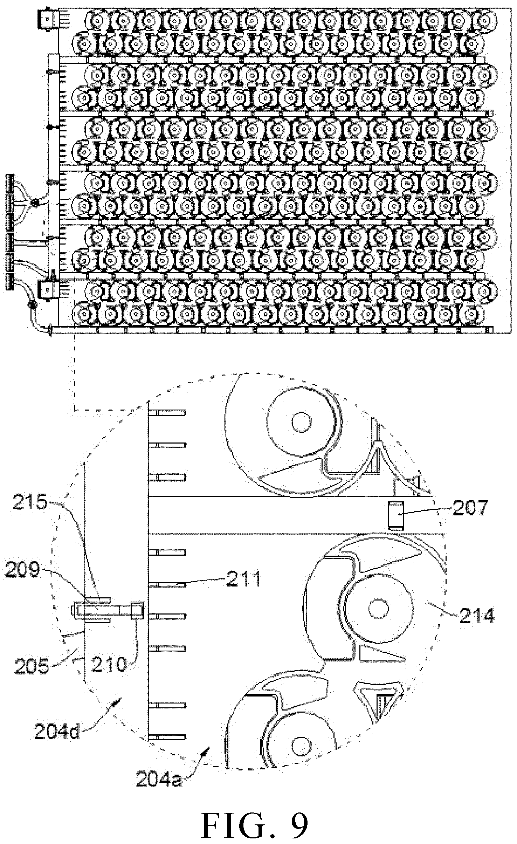

Preferably, a height of a bottom inner surface of the glue guiding groove 2042 is not lower than a height of a bottom inner surface of the wiring harness groove 2041, so that it is convenient for the glue in the glue guiding groove 2042 to flow into the wiring harness groove 2041. At the same time, the wiring harness grooves 2041 here may also play a role of storing excess glue and fixing serpentine liquid cooling plates 500. In an embodiment, as illustrated in FIG. 1 and FIG. 9, the battery pack provided in the embodiments includes the CCS assembly 200 and the battery modules in the embodiments. The battery pack here is specifically a cylindrical power battery pack, which is composed of six cylindrical power battery modules. The battery pack also includes the above-mentioned serpentine liquid cooling plates 500, a number of the serpentine liquid cooling plates 500 is six, and the serpentine liquid cooling plates 500 are arranged in one-to-one correspondence with the six wiring harness grooves 2041. The wiring harness groove 2041 is provided with a glue discharge hole 207 running through a bottom thereof. After the glue enters the wiring harness groove 2041, part of the glue flows from the glue discharge hole 207 to an underside of the plastic bracket 204, and to a gap between a bottom outer surface of the wiring harness groove 2041 and the serpentine liquid cooling plate 500, so that the serpentine liquid cooling plate 500 and the single battery 100, and the serpentine liquid cooling plate 500 and the plastic bracket 204 are bonded and fixed.

As illustrated in FIG. 4 to FIG. 6, the upper surface of the plastic bracket 204 is provided with branch grooves 2044. An extending direction of the branch groove 2044 is arranged at an included angle with an extending direction of the wiring harness groove 2041. The branch groove 2044 is configured to communicate with the wiring harness groove 2041 and the upper accommodating groove corresponding to the wiring harness groove 2041, and the collection single wirings 2051 of the collection wiring harness 205 extend to the upper accommodating groove corresponding to the collection single wiring 2051 through the branch groove 2044. The height of the bottom inner surface of the glue guiding groove 2042 is not lower than a height of a bottom inner surface of the branch groove 2044. In this embodiment, in a first aspect, an included angle between the extending direction of the branch groove 2044 and the extending direction of the wiring harness groove 2041 is 90°, and the glue in the glue guiding grooves 2042 enters the upper accommodating grooves through the branch grooves 2044 to play the role of drainage; in a second aspect, the collection single wiring 2051 stored in the branch groove 2044 is bonded and fixed with the branch groove 2044 by the glue flowing through the branch groove 2044, which has strong firmness and may reduce the possibility of the collection single wiring 2051 shaking during the operation of the battery pack, thereby ensuring the solidity of welding points between the collection single wiring 2051 and the busbar, and high safety. In an embodiment, the bottom inner surface of the glue guiding groove 2042 is higher than the bottom inner surface of the branch groove 2044.

In an embodiment, a height of a bottom inner surface of the upper accommodating groove is not higher than the height of the bottom inner surface of the branch groove 2044, and the height of the bottom inner surface of the upper accommodating groove is not higher than the height of the bottom inner surface of the glue guiding groove 2042, which is convenient for the glue in the glue guiding grooves 2042 to flow to the upper accommodating grooves, which is beneficial to improve the glue pouring efficiency.

As illustrated in FIG. 4, furthermore, in order to improve the glue pouring efficiency and the quality of gluing, both sides of the current guide group along the first direction are provided with the glue guiding grooves 2042.

In this embodiment, as illustrated in FIG. 4 and FIG. 8, in order to further improve the glue pouring efficiency and the quality of gluing, each of the upper accommodating grooves includes a plurality of first grooves arranged along the first direction. Each of the first grooves includes at least two installation areas 2047 arranged at intervals in the second direction, and the two adjacent installation areas 2047 are communicated with each other through a second groove 2048. At least one glue guiding groove 2042 is disposed between the two adjacent installation areas 2047, and the glue guiding groove 2042 communicates with the second groove 2048. A number of the installation areas 2047 of the first groove here is two, and one glue guiding groove 2042 extending along the first direction is arranged between the two installation areas 2047. In this embodiment, the first groove is configured to accommodate the current guide bar 202.

In this embodiment, the output end of the plastic bracket 204 is provided with leading wire notches 212 corresponding to the wiring harness grooves 2041 one by one. The leading wire notch 212 communicates with the corresponding wiring harness groove 2041, and the collection wiring harness 205 protrudes from the wiring harness groove 2041 by passing through the leading wire notch 212. The CCS assembly 200 further includes sealing buckles 2043 disposed on the plastic bracket 204 and configured to seal the leading wire notches 212. The collection wiring harness 205 protrudes from the wiring harness groove 2041 by passing through the sealing buckle 2043. In this embodiment, the output end of the plastic bracket 204 is an end close to a BMS 300, specifically the left end as illustrated in FIG. 1. In a first aspect, the sealing buckle 2043 here may fix the output end of the collection wiring harness 205 to a certain extent, thereby preventing the welding points between the collection wiring harness 205 and the busbar from being pulled off since the collection wiring harness 205 is pulled during the components are assembled before glue filling. In a second aspect, the sealing buckle 2043 may cooperate with the wiring harness groove 2041 to reduce a wiring height of the collection wiring harness 205, which is beneficial to reduce the thickness of the CCS assembly 200, thereby reducing the volume of the battery pack and increasing the energy density of the battery pack. In the third aspect, the sealing buckle 2043 may seal the leading wire notch 212, that is, the wiring harness groove 2041, which prevents the glue in the wiring harness groove 2041 from overflowing.

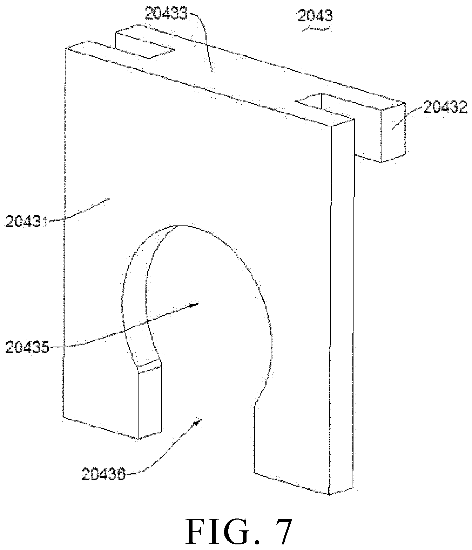

In an embodiment, as illustrated in FIG. 7, the sealing buckle 2043 includes a base plate 20431, a limiting plate 20432, and a connecting block 20433. The base plate 20431 and the limiting plate 20432 are connected through the connecting block 20433. The connecting block 20433 is clamped in the leading wire notch 212, the limiting plate 20432 is located inside the output end of the plastic bracket 204, and the base plate 20431 is located outside the output end of the plastic bracket 204. The base plate 20431 is provided with a wire hole 20435, and the collection wiring harness 205 protrudes from the wiring harness groove 2041 through the wire hole 20435. In an embodiment, the wiring harness groove 2041 is disposed on the main body 204a. The wire hardness tray 204b includes a horizontal plate 204d and a longitudinal plate 204c connected to each other. The longitudinal plate 204c is connected to the output end of the main body 204a, and the horizontal plate 204d is disposed on a side of the longitudinal plate 204c away from the main body 204a. The leading wire notch 212 is opened in the longitudinal plate 204c and communicates with the wiring harness groove 2041. The longitudinal plate 204c is located between the base plate 20431 and the limiting plate 20432. The base plate 20431 is provided with the wire hole 20435 through which the collection wiring harness 205 protrudes out of the wiring harness groove 2041 and extends into an area corresponding to the horizontal plate 204d. Furthermore, as illustrated in FIG. 7, a wire inlet notch 20436 is provided on the base plate 20431, and the wire inlet notch 20436 communicates with the wire hole 20435. The wire inlet notch 20436 enables the collection wiring harness 205 to enter the wire hole 20435 smoothly when the sealing buckle 2043 is assembled.

When in operation, the output end of the collection wiring harness 205 extends through the leading wire notch 212 to the area corresponding to the horizontal plate 204d, and then the sealing buckle 2043 is installed on the longitudinal plate 204c, that is, at the leading wire notch 212. In this process, the collection wiring harness 205 is assembled into the wire hole 20435 through the wire inlet notch 20436, and then the connection block 20433 is inserted into the leading wire notch 212. It should be noted that a width of the base plate 20431 is greater than a width of the leading wire notch 212. The wire hole 20435 is a circular hole, which cooperates with a cloth tape (not illustrated in the figures) wrapped outside the collection wiring harness 205 to block the leading wire notch 212 while accommodating the collection wiring harness 205. At the same time, the sealing buckle 2043 may realize the fixing the collection wiring harness 205, which may prevent the welding points of the collection wiring harness 205 from being pulled off when the output end of the collection wiring harness 205 is bound and fixed by using a cable tie 209, which improves the fastness of the fixing of the output end of the collection wiring harness 205. It should be noted that the steps of assembling the collection wiring harness 205 into the wiring harness groove 2041 and binding and fixing the output end of the collection wiring harness 205 are before the step of glue filling.

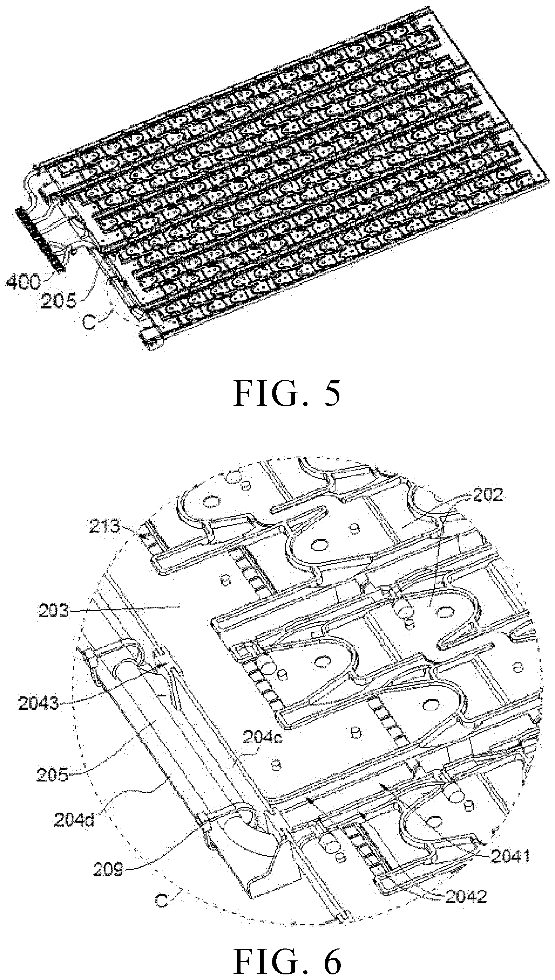

In an embodiment, as illustrated in FIG. 6 and FIG. 9, in this embodiment, the CCS assembly 200 further includes the above-mentioned cable ties 209 configured to bind the collection wiring harnesses 205 in the area corresponding to the horizontal plate 204d. A lower surface of the horizontal plate 204d is provided with a plurality limiting protrusions 215 and every two limiting protrusions 215 are arranged in groups. An area between the two limiting protrusions 215 defines a limiting groove configured to limit the cable tie 209, and the cable tie 209 is located in the limiting groove. The horizontal plate 204d is provided with first binding holes 210 each running through the horizontal plate 204d and each configured to thread the cable tie 209. In this embodiment, the limiting groove and the first binding hole 210 may prevent the cable tie 209 from shifting, and increase the stability and fastness of the cable tie 209 binding the output end of the collection wiring harness 205.

In this embodiment, fixing components also include wiring pressing strips 2045 arranged at the wiring harness groove 2041. The collection wiring harness 205 is located between a bottom of the wiring harness groove 2041 and the wiring pressing strip 2045. The collection wiring harness 205 includes a plurality of collection single wirings 2051, and the wiring pressing strip 2045 is provided with a through groove 2046 configured for the collection single wiring 2051 to enter the wiring harness groove 2041. In this embodiment, multiple wiring pressing strips 2045 are evenly spaced along the extending direction of the wiring harness groove 2041. The wiring pressing strip 2045 here is arrange on a top of the wiring harness groove 2041 and configured to limit the collection wiring harness 205 on the top of the wiring harness groove 2041, so as to prevent the collection wiring harness 205 embedded in the wiring harness groove 2041 from breaking away from the wiring harness groove 2041.

In this embodiment, a width of the through groove 2046 is greater than or equal to an outer diameter of the collection single wiring 2051. Preferably, the width of the through groove 2046 is slightly greater than that of the collection single wiring 2051, so that it is convenient for the collection single wiring 2051 to be assembled into the wiring harness groove 2041 through the through groove 2046, and it is also possible to prevent the collection single wiring 2051 from breaking away from the wiring harness through the through groove 2046 under non-artificial conditions.

Optionally, a length direction of the through groove 2046 and the extending direction of the wiring harness groove 2041 are arranged at an included angle. In an embodiment, the included angle between the length direction of the through groove 2046 and the extending direction of the wiring harness groove 2041 ranges from 10° to 80°. In this embodiment, preferably, the included angle between the length direction of the through groove 2046 and the extending direction of the wiring harness groove 2041 is 30°. The wiring pressing strip 2045 here may play a role of fixing the collection wiring harness 205 to a certain extent, and a structural design of the through groove 2046 makes each collection single wiring 2051 of the collection wiring harness 205 easy to comb.

In this embodiment, the input bar 201, the output bar 206, and the series connection bar 203 are all provided with structural weakening holes 213, which may reduce a cross-sectional area of a corresponding area, and the structural weakening holes 213 may be fused when the circuit is overloaded here, thereby playing a role of circuit protection.

In this embodiment, as illustrated in FIG. 9, a plurality of rib plates 211 are disposed between the longitudinal plate 204c and a bottom surface of the main body 204a. The rib plate 211 here reinforces the longitudinal plate 204c, that is, the wiring harness tray 204b.

In this embodiment, a connector 400 is provided on the output ends of the collection wiring harnesses 205, and the connector 400 is configured to connect the collection wiring harnesses 205 to the BMS 300.

### Embodiment 2

This embodiment is an improvement on Embodiment 1, and repeated content will not be repeated here.

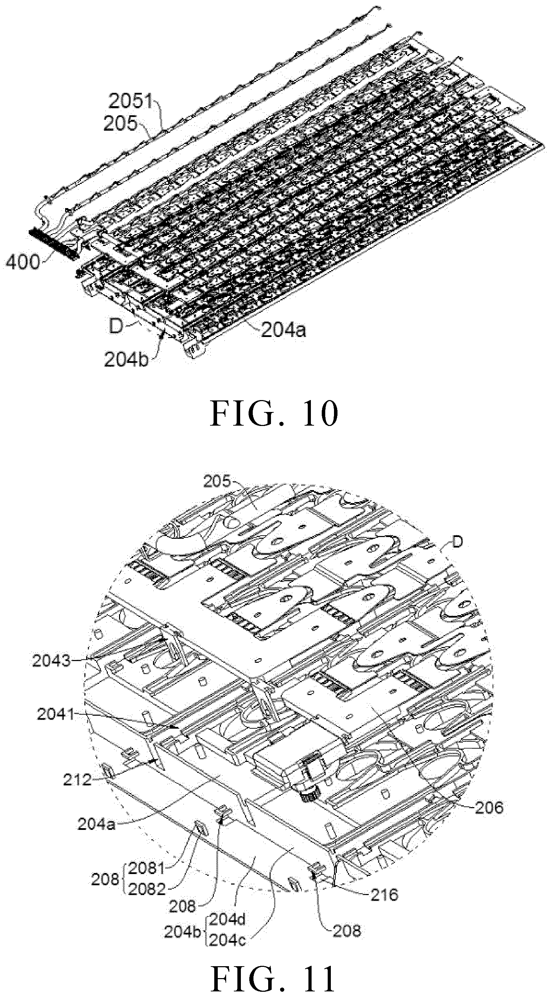

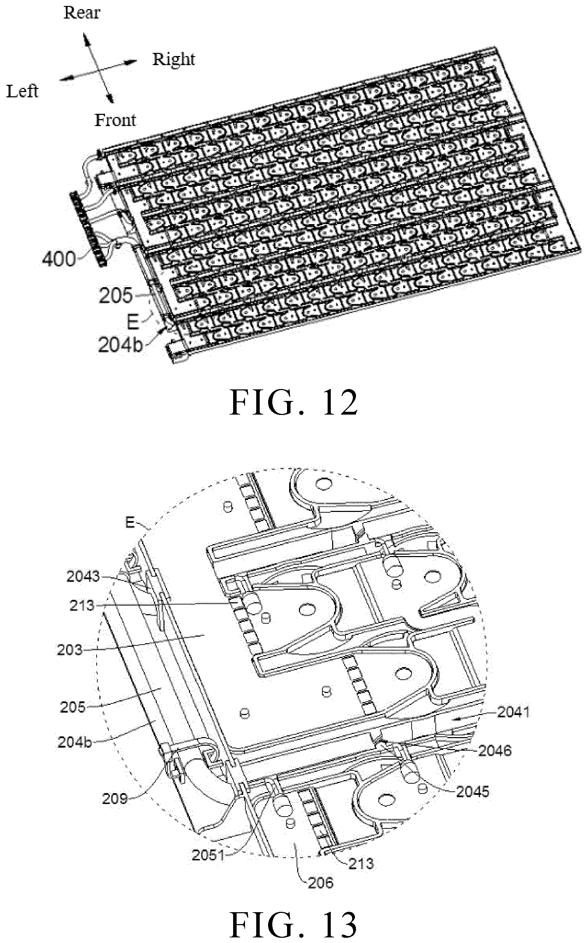

Referring to FIG. 10 to FIG. 14, the CCS assembly 200 includes cable ties 209 and fixing buckles, which are all configured to fix the collection wiring harnesses 205 in the area corresponding to the horizontal plate 204d. Each of the fixing buckles includes two binding buckles 208 correspondingly arranged, one of the two binding buckles 208 is arranged on the horizontal plate 204d, and the other one of the two binding buckles 208 is arranged on the horizontal plate 204d or the longitudinal plate 204c. The collection wiring harness 205 is located between the two binding buckles 208. Each of the binding buckles 208 includes a base 2081, and a second binding hole 2082 runs through the base 2081 and is configured to thread the cable tie 209. In this embodiment, for the convenience of description, the cable tie 209 and the fixing buckle are referred to as a fixing component, where a number of fixing components is equal to the number of the collecting wiring harnesses 205, and the two are provided in one-to-one correspondence. That is to say, one fixing component corresponds to one collection wiring harness 205, which may avoid confusion of the collection single wirings 2051 of different collection wiring harnesses 205, facilitate management and layout of the collection wiring harnesses 205, and improve the efficiency of subsequent assembly of the collection wiring harnesses 205 to the connector 400.

In an embodiment, the left end of the plastic bracket 204 is its output end. When in operation, after the collection single wirings 2051 of the collection wiring harness 205 are welded to the busbar or the single batteries, the output end of the collection wiring harness 205 is close to the fixing buckle, and then the collection wiring harness 205 is tied and fixed to the fixing buckle through the cable tie 209. The fixing buckle here is convenient for the collection wiring harness 205 to lean against, so that it is convenient to bind and fix the collection wiring harness 205 with the cable tie 209, which may improve a structural stability of the output end of the collection wiring harness 205, and is conducive to a neat layout of the output ends of the collection wiring harnesses 205, which may further improve a subsequent battery assembly efficiency, and reduce the possibility of pulling off the welding points of the collection wiring harness 205 during the binding and assembly process.

Furthermore, when in operation, in a first step, the input end of the collection single wiring 2051 is electrically connected to the corresponding cylindrical power battery module; in a second step, each collection single wiring 2051 is correspondingly embedded in the wiring harness groove 2041, and the output end of the collection single wiring 2051 first passes through a gap between the two binding buckles 208 and then extends along the front-rear direction to an appropriate position; in a third step, the cable tie 209 sequentially passes through the second binding holes 2082 corresponding to the two binding buckles 208 to bind and fix the collection wiring harness 205 in the gap between the two binding buckles 208. The binding buckle 208 here is convenient for the cable tie 209 to bind and fix the collection wiring harness 205.

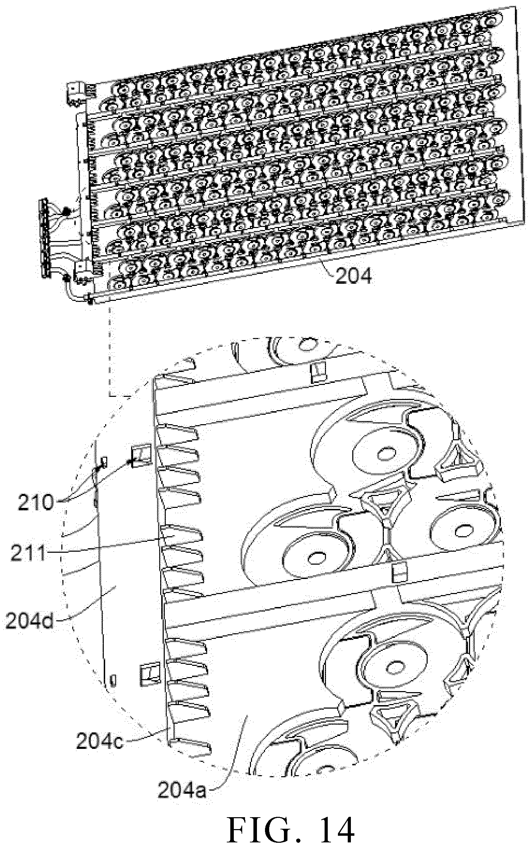

The horizontal plate 204d is provided with forming ports 216 each running through the horizontal plate 204d and each corresponding to the binding buckle 208. The wiring harness tray 204b is integrally formed with the main body 204a. The forming opening 216 here facilitates an injection molding of the binding buckle 208 and the wiring harness tray 204b. In an embodiment, as illustrated in FIG. 11 and FIG. 14, in this embodiment, the binding buckles 208 corresponding to the two fixing buckles arranged at a rear portion of the main body 204a are all arranged on the horizontal plate 204d, and the two binding buckles 208 corresponding to the same fixing buckle are arranged in parallel. Each of the other four fixing buckles has the corresponding binding buckles 208, one of which is arranged on the horizontal plate 204d and the other one is arranged on the longitudinal plate 204c, which is convenient for collecting the collection wiring harnesses 205 along the front-rear direction, so as to route and tie them to approach an installation position of the BMS 300. Of course, in other embodiments, an arrangement of the two binding buckles 208 constituting the same fixing buckle may be adjusted according to actual needs. A principle is that there is a gap between the two binding buckles 205 for accommodating the collection wiring harness 205, and it is convenient to cooperate with the cable tie 209 to bind and fix the collection wiring harness 205. The wiring harness tray 204b here is configured to support the collection wiring harnesses 205, which may auxiliary limit the collection wiring harnesses 205 to a certain extent, so that the staff may quickly fix the output end of the collection wiring harness 205, thereby preventing the output end of collection wiring harness 205 from interfering with a battery structure on a lower surface of the wiring harness tray 204b, while reducing the technical difficulty of fixing the output end of the collection wiring harness 205.

## Claims

1. A cell contact system, CCS, assembly, comprising:
busbars;
a plastic bracket (204), having an upper surface provided with upper accommodating grooves configured to accommodate the busbars, and having a lower surface provided with lower accommodating grooves (214) configured to accommodate single batteries (100), wherein the upper accommodating grooves and the lower accommodating grooves (214) are communicated to make the busbars abut against the single batteries (100); and
glue guiding grooves (2042), disposed on the upper surface of the plastic bracket (204), wherein each of the glue guiding grooves (2042) communicates with the upper accommodating grooves adjacent thereto;
wherein the busbars comprise an input bar (201), current guide bars (202), series connection bars (203), and an output bar (206), all of which are correspondingly embedded in the upper accommodating grooves;
the current guide bars (202) cooperate with the input bar (201) and the output bar (206) to connect every two adjacent ones of the single batteries (100) in series in a first direction, and to connect two adjacent ones of the single batteries (100) in parallel in a second direction;
current guide groups each comprising a plurality of the current guide bars (202) connected in series along the first direction are defined, and each of the series connection bars (203) is configured to connect two adjacent ones of the current guide groups arranged along the second direction in series;
each of the glue guiding grooves (2042) extends along the first direction;
the CCS assembly further comprises collection wiring harnesses (205), input ends of the collection wiring harnesses (205) are electrically connected to the busbars or the single batteries (100);
wiring harness grooves (2041) each extending along the first direction are provided on the plastic bracket (204), the collection wiring harnesses (205) are embedded in the wiring harness grooves (2041), and the wiring harness grooves (2041) are arranged in one-to-one correspondence with the current guide groups; and
**characterized in that** the wiring harness grooves (2041) are arranged adjacent to the glue guiding grooves (2042), and each of the wiring harness grooves (2041) communicates with the glue guiding grooves (2042) adjacent thereto.

2. The CCS assembly according to claim 1, **characterized in that** a height of a bottom inner surface of each of the glue guiding grooves (2042) is not lower than a height of a bottom inner surface of each of the wiring harness grooves (2041).

3. The CCS assembly according to claim 1, **characterized in that** each of the wiring harness grooves (2041) is provided with a glue discharge hole (207) running through a bottom thereof.

4. The CCS assembly according to claim 1, **characterized in that** branch grooves (2044) are provided on the upper surface of the plastic bracket (204), an extending direction of each of the branch grooves (2044) is arranged at an included angle with an extending direction of each of the wiring harness grooves (2041);
each of the branch grooves (2044) is configured to communicate with a corresponding one of the wiring harness grooves (2041) and one of the upper accommodating grooves corresponding to the corresponding one of the wiring harness grooves (2041), collection single wirings (2051) of the collection wiring harnesses (205) extend to the upper accommodating grooves corresponding to the collection wiring harnesses (205) through the branch grooves (2044); and
a height of a bottom inner surface of each of glue guiding grooves (2042) is not lower than a height of a bottom inner surface of each of the branch grooves (2044).

5. The CCS assembly according to claim 4, **characterized in that** a height of a bottom inner surface of each of the upper accommodating grooves is not higher than the height of the bottom inner surface of each of the branch grooves (2044); and
the height of the bottom inner surface of each of the upper accommodating grooves is not higher than the height of the bottom inner surface of each of the glue guiding grooves (2042).

6. The CCS assembly according to any one of claims 1 to 5, **characterized in that** both sides of each of the current guide groups along the first direction are provided with the glue guiding grooves (2042);
each of the upper accommodating grooves comprises a plurality of first grooves arranged along the first direction, each of the first grooves comprises at least two installation areas (2047) arranged at intervals in the second direction, and two adjacent ones of the installation areas (2047) are communicated with each other through a second groove (2048); and
at least one of the glue guiding grooves (2042) is arranged between the two adjacent ones of the installation areas (2047) and communicates with the second groove (2048).

7. The CCS assembly according to any one of claims 1 to 5, **characterized in that** an output end of the plastic bracket (204) is provided with leading wire notches (212) corresponding to the wiring harness grooves (2041) one by one, each of the leading wire notches (212) communicates with a corresponding one of the wiring harness grooves (2041), and the collection wiring harnesses (205) protrude from the wiring harness grooves (2041) by passing through the leading wire notches (212);
the CCS assembly (200) further comprises sealing buckles (2043) disposed on the plastic bracket (204) and configured to seal the leading wire notches (212); and
the collection wiring harnesses (205) protrude from the wiring harness grooves (2041) by passing through the sealing buckles (2043).

8. The CCS assembly according to claim 7, **characterized in that** each of the sealing buckles (2043) comprises a base plate (20431), a limiting plate (20432), and a connecting block (20433), and the base plate (20431) is connected with the limiting plate (20432) through the connecting block (20433);
the connecting block (20433) is clamped in one of the leading wire notches (212), the limiting plate (20432) is located inside the output end of the plastic bracket (204), and the base plate (20431) is located outside the output end of the plastic bracket (204); and
the base plate (20431) is provided with a wire hole (20435), and one of the collection wiring harnesses (205) protrudes from one of the wiring harness grooves (2041) through the wire hole (20435).

9. The CCS assembly according to claim 8, **characterized in that** the plastic bracket (204) comprises a main body (204a) and a wire hardness tray (204b) disposed on the output end of the plastic bracket (204), the wiring harness grooves (2041), the upper accommodating grooves, and the lower accommodating grooves (214) are all disposed on the main body (204a);
the wire hardness tray (204b) comprises a horizontal plate (204d) and a longitudinal plate (204c) connected with each other, the longitudinal plate (204c) is connected to an output end of the main body (204a), and the horizontal plate (204d) is disposed on a side of the longitudinal plate (204c) away from the main body (204a);
the leading wire notches (212) are opened on the longitudinal plate (204c), and the longitudinal plate (204c) is located between the base plate (20431) and the limiting plate (20432); and
the base plate (20431) is provided with a wire hole (20435) through which one of the collection wiring harnesses (205) protrudes out of one of the wiring harness grooves (2041) and extends into an area corresponding to the horizontal plate (204d).

10. The CCS assembly according to claim 9, **characterized by** further comprising cable ties (209) configured to bind the collection wiring harnesses (205) in the area corresponding to the horizontal plate (204d),
wherein a lower surface of the horizontal plate (204d) is provided with a plurality limiting protrusions (215) every two of which arranged in groups, an area between the every two of the limiting protrusions (215) defines a limiting groove configured to limit one of the cable ties (209), and the one of the cable ties (209) is located in the limiting groove; and
the horizontal plate (204d) is provided with first binding holes (2130) each running through the horizontal plate (204d) and each configured to thread one of the cable ties (209).

11. The CCS assembly according to claim 9, **characterized by** further comprising cable ties (209) and fixing buckles, which are all configured to fix the collection wiring harness (205) in the area corresponding to horizontal plate (204d),
wherein each of the fixing buckles comprises two binding buckles (208) correspondingly arranged, one of which is arranged on the horizontal plate (204d), and the other one is arranged on the horizontal plate (204d) or the longitudinal plate (204c);
the two binding buckles (208) have one of the collection wiring harnesses (205) located therebetween;
each of the binding buckles (208) comprises a base (2081), and a second binding hole (2082) runs through the base (2081) and configured to thread one of the cable ties (209); and
the horizontal plate (204d) is provided with forming ports (216) each running through the horizontal plate (204d) and each corresponding to one of the binding buckles (208).

12. The CCS assembly according to any one of claims 1 to 5 and 8 to 11, **characterized in that** wiring pressing strips (2045) are provided at each of the wiring harness grooves (2041);
the collection wiring harnesses (205) are located between bottoms of the wiring harness grooves (2041) and the wiring pressing strips (2045); and
the collection wiring harnesses (205) comprise a plurality of collection single wirings (2051), each of the wiring pressing strips (2045) is provided with a through groove (2046) configured for the collection single wirings (2051) to enter the wiring harness grooves (2041).

13. The CCS assembly according to claim 12, **characterized in that** a length direction of the through groove (2046) and an extending direction of each of the wiring harness grooves (2041) are arranged at an included angle; and
the included angle between the length direction of the through groove (2046) and the extending direction of each of the wiring harness grooves (2041) ranges from 10⁰ to 80°.

14. A battery pack, **characterized by** comprising the CCS assembly (200) according to any one of claims 1 to 13.

## Patentansprüche

1. Eine Baugruppe eines Zellkontaktsystems (CCS), umfassend:
Sammelschienen;
eine Kunststoffhalterung (204), deren Oberseite mit oberen Aufnahmerillen versehen ist, die zur Aufnahme der Sammelschienen ausgelegt sind, und deren Unterseite mit unteren Aufnahmerillen (214) versehen ist, die zur Aufnahme einzelner Batterien (100) ausgelegt sind, wobei die oberen Aufnahmerillen und die unteren Aufnahmerillen (214) miteinander verbunden sind, damit die Sammelschienen an den einzelnen Batterien (100) anliegen; und
Klebstoffführungsnuten (2042), die an der Oberseite der Kunststoffhalterung (204) angeordnet sind, wobei jede der Klebstoffführungsnuten (2042) mit den daran angrenzenden oberen Aufnahmerillen in Verbindung steht;
wobei die Sammelschienen eine Eingangsschiene (201), Stromführungsschienen (202), Reihenschlussschienen (203) und eine Ausgangsschiene (206) umfassen, die alle entsprechend in die oberen Aufnahmerillen eingelassen sind;
die Stromführungsschienen (202) mit der Eingangsschiene (201) und der Ausgangsschiene (206) zusammenwirken, um jeweils zwei benachbarte Einzelbatterien (100) in einer ersten Richtung in Reihe zu schalten und zwei benachbarte Einzelbatterien (100) in einer zweiten Richtung parallel zu schalten;
Stromführungsgruppen, die jeweils aus einer Vielzahl von Stromführungsschienen (202) bestehen, definiert ist, die entlang der ersten Richtung in Reihe geschaltet sind, und jede der Reihenschlussschienen (203) so ausgelegt ist, dass sie zwei benachbarte der entlang der zweiten Richtung angeordneten Stromführungsgruppen in Reihe verbindet;
Jede der Klebstoffführungsnuten (2042) entlang der ersten Richtung verläuft;
die CCS-Baugruppe ferner Sammelkabelbäume (205) umfasst, deren Eingangsenden elektrisch mit den Sammelschienen oder den einzelnen Batterien (100) verbunden sind;
Kabelbaumnuten (2041), die sich jeweils entlang der ersten Richtung erstrecken und an der Kunststoffhalterung (204) vorgesehen sind; wobei die Sammelkabelbäume (205) in die Kabelbaumnuten (2041) eingelassen sind, und die Kabelbaumnuten (2041) in einer Eins-zu-Eins-Entsprechung zu den Stromführungsgruppen angeordnet sind; und
**dadurch gekennzeichnet, dass** die Kabelbaumnuten (2041) benachbart zu den Klebstoffführungsnuten (2042) angeordnet sind und jede der Kabelbaumnuten (2041) mit den benachbarten Klebstoffführungsnuten (2042) in Verbindung steht.

2. Die CCS-Baugruppe nach Anspruch 1, **dadurch gekennzeichnet, dass** die Höhe der inneren Bodenfläche jeder der Klebstoffführungsnuten (2042) nicht geringer als die Höhe der inneren Bodenfläche jeder der Kabelbaumnuten (2041) ist.

3. Die CCS-Baugruppe nach Anspruch 1, **dadurch gekennzeichnet, dass** jede der Kabelbaumnuten (2041) mit einer Klebstoffauslassöffnung (207) versehen ist, die durch deren Boden verläuft.

4. Die CCS-Baugruppe nach Anspruch 1, **dadurch gekennzeichnet, dass** an der Oberseite der Kunststoffhalterung (204) Abzweigkanäle (2044) vorgesehen sind, wobei die Erstreckungsrichtung jedes der Abzweigkanäle (2044) in einem bestimmten Winkel zur Erstreckungsrichtung jedes der Kabelbaumnuten (2041) verläuft;
Jede der Abzweigkanäle (2044) so ausgebildet ist, dass sie mit einem entsprechenden der Kabelbaumnuten (2041) und einem der oberen Aufnahmerillen, der dem entsprechenden der Kabelbaumnuten (2041) entspricht, in Verbindung steht, die einzelnen Leitungen (2051) der Sammelkabelbäume (205) durch die Abzweigkanäle (2044) zu den oberen Aufnahmerillen verlaufen, die den Sammelkabelbäumen (205) entsprechen; und
die Höhe der inneren Bodenfläche jeder der Klebstoffführungsnuten (2042) nicht geringer als die Höhe der inneren Bodenfläche jeder der Abzweigkanäle (2044) ist.

5. Die CCS-Baugruppe nach Anspruch 4, **dadurch gekennzeichnet, dass** die Höhe der unteren Innenfläche jeder der oberen Aufnahmerillen nicht größer als die Höhe der unteren Innenfläche jeder der Abzweigkanäle (2044) ist; und
die Höhe der unteren Innenfläche jeder der oberen Aufnahmerillen nicht größer als die Höhe der unteren Innenfläche jeder der Klebstoffführungsnuten (2042) ist.

6. Die CCS-Baugruppe gemäß einem der Ansprüche 1 bis 5, **dadurch gekennzeichnet, dass** beide Seiten jeder der Stromführungsgruppen entlang der ersten Richtung mit Klebstoffführungsnuten (2042) versehen sind;
Jede der oberen Aufnahmerillen eine Vielzahl von ersten Rillen umfasst, die entlang der ersten Richtung angeordnet sind; jede der ersten Rillen umfasst mindestens zwei Einbaubereiche (2047), die in Abständen in der zweiten Richtung angeordnet sind; und zwei benachbarte der Einbaubereiche (2047)über eine zweite Rille (2048) miteinander verbunden sind; und
mindestens eine der Klebstoffführungsnuten (2042) zwischen zwei benachbarten Montagebereichen (2047) angeordnet ist und mit der zweiten Nut (2048) in Verbindung steht.

7. CCS-Baugruppe nach einem der Ansprüche 1 bis 5, **dadurch gekennzeichnet, dass** ein Ausgangsende der Kunststoffhalterung (204) mit Leitungsausnehmungen (212) versehen ist, die einzeln den Kabelbaumnuten (2041) entsprechen, wobei jede der Leitungsausnehmungen (212) mit einer entsprechenden der Kabelbaumnuten (2041) in Verbindung steht, und die Sammelkabelbäume (205) ragen aus den Kabelbaumnuten (2041) heraus, indem sie durch die Kabelführungsaussparungen (212) verlaufen;
die CCS-Baugruppe (200) umfasst ferner Dichtungslaschen (2043), die an der Kunststoffhalterung (204) angeordnet und so ausgebildet sind, dass sie die Aussparungen (212) für die Anschlussdrähte abdichten; und
die Kabelbäume (205) ragen aus den Kabelbaumnuten (2041) heraus, indem sie durch die Dichtungslaschen (2043) geführt werden.

8. CCS-Baugruppe nach Anspruch 7, **dadurch gekennzeichnet, dass** jede der Dichtungslaschen (2043) eine Grundplatte (20431), eine Begrenzungsplatte (20432) und einen Verbindungsblock (20433) umfasst, und die Grundplatte (20431) über den Verbindungsblock (20433) mit der Begrenzungsplatte (20432) verbunden ist;
der Verbindungsblock (20433) in einer der Führungsdrahtkerben (212) eingeklemmt ist, die Begrenzungsplatte (20432) sich innerhalb des Ausgangsendes der Kunststoffhalterung (204) befindet und die Grundplatte (20431) sich außerhalb des Ausgangsendes der Kunststoffhalterung (204) befindet; und
die Grundplatte (20431) mit einer Kabeldurchführung (20435) versehen ist, und einer der Sammelkabelbäume (205) aus einer der Kabelbaumnuten (2041) durch die Kabeldurchführung (20435) heraus ragt.

9. CCS-Baugruppe nach Anspruch 8, **dadurch gekennzeichnet, dass** die Kunststoffhalterung (204) einen Hauptkörper (204a) und eine am Ausgangsende der Kunststoffhalterung (204) angeordnete Kabelhalterung (204b) umfasst, die Kabelbaumnuten (2041), die oberen Aufnahmerillen und die unteren Aufnahmerillen (214) alle am Hauptkörper (204a) angeordnet sind;
die Kabelhalterung (204b) eine horizontale Platte (204d) und eine Längsplatte (204c) umfasst, die miteinander verbunden sind; die Längsplatte (204c) mit einem Ausgangsende des Hauptkörpers (204a) verbunden ist, und die horizontale Platte (204d) auf einer Seite der Längsplatte (204c) angeordnet ist, die vom Hauptkörper (204a) abgewandt ist;
die Führungsdrahtkerben (212) an der Längsplatte (204c) ausgebildet sind, und die Längsplatte (204c) sich zwischen der Grundplatte (20431) und der Begrenzungsplatte (20432) befindet; und
die Grundplatte (20431) mit einer Kabeldurchführung (20435) versehen ist, durch die einer der Sammelkabelbäume (205) aus einer der Kabelbaumnuten (2041) herausragt und sich in einen Bereich erstreckt, der der horizontalen Platte (204d) entspricht.

10. Die CCS-Baugruppe nach Anspruch 9, **dadurch gekennzeichnet, dass** sie ferner Kabelbinder (209) umfasst, die dazu ausgelegt sind, die Sammelkabelbäume (205) in dem der horizontalen Platte (204d) entsprechenden Bereich zu bündeln,
wobei eine Unterseite der horizontalen Platte (204d) mit einer Vielzahl von Begrenzungsvorsprüngen (215) versehen ist, von denen jeweils zwei in Gruppen angeordnet sind, wobei ein Bereich zwischen jeweils zwei der Begrenzungsvorsprünge (215) eine Begrenzungsnut bildet, die dazu ausgelegt ist, einen der Kabelbinder (209) zu begrenzen, und wobei der eine der Kabelbinder (209) in der Begrenzungsnut angeordnet ist; und
die horizontale Platte (204d) mit ersten Befestigungslöchern (2130) versehen ist, die jeweils durch die horizontale Platte (204d) verlaufen und jeweils so ausgebildet sind, dass ein Kabelbinder (209) hindurchgeführt werden kann.

11. Die CCS-Baugruppe nach Anspruch 9, **dadurch gekennzeichnet, dass** sie ferner Kabelbinder (209) und Befestigungsschnallen umfasst, die alle dazu ausgelegt sind, den Sammelkabelbaum (205) in dem der horizontalen Platte (204d) entsprechenden Bereich zu befestigen,
wobei jede der Befestigungsschnallen zwei entsprechend angeordnete Befestigungsschnallen (208) umfasst, von denen eine an der horizontalen Platte (204d) und die andere an der horizontalen Platte (204d) oder der Längsplatte (204c) angeordnet ist;
zwischen den beiden Befestigungsschnallen (208) sich einer der Sammelkabelbäume (205) befindet;
Jede der Befestigungsschnallen (208) umfasst eine Basis (2081), und ein zweites Bindungsloch (2082) durch die Basis (2081) verläuft und ist so ausgelegt, dass ein Kabelbinder (209) hindurchgeführt werden kann; und
die horizontale Platte (204d) mit Formöffnungen (216) versehen ist, die jeweils durch die horizontale Platte (204d) verlaufen und jeweils einer der Befestigungsschnallen (208) entsprechen.

12. Die CCS-Baugruppe nach einem der Ansprüche 1 bis 5 und 8 bis 11, **dadurch gekennzeichnet, dass** an jeder der Kabelbaumnuten (2041) Kabelpressleisten (2045) vorgesehen sind;
die Kabelbäume (205) sich zwischen den Böden der Kabelbaumnuten (2041) und den Kabelpressleisten (2045) befinden; und
die Sammelkabelbäume (205) aus einer Vielzahl von Sammel-Einzelkabeln (2051) bestehen; jede der Kabelpressleisten (2045) mit einer Durchgangsnut (2046) versehen ist, die so ausgebildet ist, dass die Sammel-Einzelkabel (2051) in die Kabelbaumnuten (2041) eintreten können.

13. Die CCS-Baugruppe nach Anspruch 12, **dadurch gekennzeichnet, dass** eine Längsrichtung der Durchgangsnut (2046) und eine Ausdehnungsrichtung jeder der Kabelbaumnuten (2041) in einem bestimmten Winkel zueinander angeordnet sind; und
der Winkel zwischen der Längsrichtung der Durchgangsnut (2046) und der Ausdehnungsrichtung jeder der Kabelbaumnuten (2041) im Bereich von 10° bis 80°liegt.

14. Ein Akkupack, **dadurch gekennzeichnet, dass** es die CCS-Baugruppe (200) gemäß einem der Ansprüche 1 bis 13 umfasst.

## Revendications

1. Ensemble de système de contact cellulaire (CCS), comprenant :
barres omnibus ;
un support en plastique (204), comportant une surface supérieure pourvue de rainures de logement supérieures conçues pour recevoir les barres omnibus, et comportant une surface inférieure pourvue de rainures de logement inférieures (214) conçues pour recevoir des batteries individuelles (100), les rainures de logement supérieures et les rainures de logement inférieures (214) étant reliées entre elles de manière à ce que les barres omnibus viennent en butée contre les batteries individuelles (100) ; et
des rainures de guidage de colle (2042), disposées sur la face supérieure du support en plastique (204), chacune de ces rainures de guidage de colle (2042) communiquant avec les rainures de logement supérieures qui lui sont adjacentes ;
dans lequel les barres omnibus comprennent une barre d'entrée (201), des barres de guidage de courant (202), des barres de connexion en série (203) et une barre de sortie (206), qui sont toutes encastrées de manière correspondante dans les rainures de logement supérieures ;
les barres de guidage de courant (202) coopèrent avec la barre d'entrée (201) et la barre de sortie (206) pour relier en série deux batteries individuelles (100) adjacentes dans une première direction, et pour relier en parallèle deux batteries individuelles (100) adjacentes dans une deuxième direction ;
des groupes de guidage de courant, comprenant chacun une pluralité de barres de guidage de courant (202) connectées en série dans la première direction, sont définis, et chacune des barres de connexion en série (203) est configurée pour relier en série deux groupes de guidage de courant adjacents disposés dans la deuxième direction ;
chacune des rainures de guidage de colle (2042) s'étend dans la première direction ;
l'ensemble CCS comprend en outre des faisceaux de câbles de collecte (205), dont les extrémités d'entrée sont reliées électriquement aux barres omnibus ou aux batteries individuelles (100) ;
des rainures pour faisceaux de câbles (2041), s'étendant chacune dans la première direction, sont prévues sur le support en plastique (204) ; les faisceaux de câbles de collecte (205) sont logés dans les rainures pour faisceaux de câbles (2041) ; et les rainures pour faisceaux de câbles (2041) sont disposées en correspondance biunivoque avec les groupes de guidage de courant ; et
**caractérisé en ce que** les rainures pour faisceaux de câbles (2041) sont disposées à proximité immédiate des rainures de guidage de colle (2042), et **en ce que** chacune des rainures pour faisceaux de câbles (2041) communique avec les rainures de guidage de colle (2042) qui lui sont adjacentes.

2. Ensemble CCS selon la revendication 1, **caractérisé en ce que** la hauteur de la surface intérieure inférieure de chacune des rainures de guidage de colle (2042) n'est pas inférieure à la hauteur de la surface intérieure inférieure de chacune des rainures pour faisceaux de câbles (2041).

3. Ensemble CCS selon la revendication 1, **caractérisé en ce que** chacune des rainures (2041) pour faisceaux de câbles est pourvue d'un orifice de sortie de colle (207) traversant son fond.

4. Ensemble CCS selon la revendication 1, **caractérisé en ce que** des rainures de dérivation (2044) sont prévues sur la surface supérieure du support en plastique (204), la direction d'extension de chacune des rainures de dérivation (2044) formant un angle avec la direction d'extension de chacune des rainures pour faisceaux de câbles (2041) ;
chacune des rainures de dérivation (2044) est configurée pour communiquer avec une rainure pour faisceaux de câbles (2041) correspondante et avec l'une des rainures de logement supérieures correspondant à ladite rainure pour faisceaux de câbles (2041), les câbles individuels de regroupement (2051) des faisceaux de câbles de collecte (205) s'étendent vers les rainures de logement supérieures correspondant aux faisceaux de câbles de collecte (205) à travers les rainures de dérivation (2044) ; et
la hauteur de la surface intérieure inférieure de chacune des rainures de guidage de colle (2042) n'est pas inférieure à la hauteur de la surface intérieure inférieure de chacune des rainures de dérivation (2044).

5. Ensemble CCS selon la revendication 4, **caractérisé en ce que** la hauteur de la surface intérieure inférieure de chacune des rainures de logement supérieures n'est pas supérieure à la hauteur de la surface intérieure inférieure de chacune des rainures de dérivation (2044) ; et
la hauteur de la surface intérieure inférieure de chacune des rainures de logement supérieures n'est pas supérieure à la hauteur de la surface intérieure inférieure de chacune des rainures de guidage de colle (2042).

6. Ensemble CCS selon l'une quelconque des revendications 1 à 5, **caractérisé en ce que** les deux côtés de chacun des groupes de guidage de courant, dans la première direction, sont pourvus de rainures de guidage de colle (2042) ;
chacune des rainures d'accueil supérieures comprend une pluralité de premières rainures disposées selon la première direction ; chacune des premières rainures comprend au moins deux zones d'installation (2047) disposées à intervalles réguliers selon la deuxième direction ; et deux zones d'installation (2047) adjacentes communiquent entre elles par l'intermédiaire d'une deuxième rainure (2048) ; et
au moins l'une des rainures de guidage de colle (2042) est disposée entre deux zones de pose (2047) adjacentes et communique avec la deuxième rainure (2048).

7. Ensemble CCS selon l'une quelconque des revendications 1 à 5, **caractérisé en ce qu'**une extrémité de sortie du support en plastique (204) est pourvue d'encoches pour fils de sortie (212) correspondant une à une aux rainures pour faisceaux de câbles (2041), chacune des encoches pour fils de sortie (212) communiquant avec l'une des rainures pour faisceaux de câbles (2041) correspondantes, et les faisceaux de câbles de collecte (205) font saillie hors des rainures (2041) pour faisceaux de câbles en passant à travers les encoches (212) pour fils de sortie ;
l'ensemble CCS (200) comprend en outre des boucles d'étanchéité (2043) disposées sur le support en plastique (204) et conçues pour assurer l'étanchéité des encoches pour fils de connexion (212) ; et
Les faisceaux de câbles (205) dépassent des rainures (2041) prévues à cet effet en passant à travers les boucles d'étanchéité (2043).

8. Ensemble CCS selon la revendication 7, **caractérisé en ce que** chacune des boucles d'étanchéité (2043) comprend une plaque de base (20431), une plaque de limitation (20432) et un bloc de liaison (20433), et la plaque de base (20431) est reliée à la plaque de limitation (20432) par l'intermédiaire du bloc de liaison (20433) ;
le bloc de liaison (20433) est fixé dans l'une des encoches pour fil de guidage (212), la plaque de limitation (20432) est située à l'intérieur de l'extrémité de sortie du support en plastique (204), et la plaque de base (20431) est située à l'extérieur de l'extrémité de sortie du support en plastique (204) ; et
La plaque de base (20431) est pourvue d'un trou de passage de câble (20435), et l'un des faisceaux de câbles de collecte (205) sort de l'une des rainures pour faisceaux de câbles (2041) en passant par le trou de passage de câble (20435).

9. Ensemble CCS selon la revendication 8, **caractérisé en ce que** le support en plastique (204) comprend un corps principal (204a) et un plateau de maintien des câbles (204b) disposé à l'extrémité de sortie du support en plastique (204), les rainures pour faisceaux de câbles (2041), les rainures de logement supérieures et les rainures de logement inférieures (214) sont toutes disposées sur le corps principal (204a) ;
le plateau de maintien des câbles (204b) comprend une plaque horizontale (204d) et une plaque longitudinale (204c) reliées l'une à l'autre, la plaque longitudinale (204c) étant reliée à une extrémité de sortie du corps principal (204a), et la plaque horizontale (204d) est disposée sur un côté de la plaque longitudinale (204c) opposé au corps principal (204a) ;
les encoches pour fils conducteurs (212) sont pratiquées sur la plaque longitudinale (204c), et la plaque longitudinale (204c) est située entre la plaque de base (20431) et la plaque de limitation (20432) ; et
La plaque de base (20431) est pourvue d'un orifice (20435) à travers lequel l'un des faisceaux de câbles de collecte (205) sort de l'une des rainures (2041) pour faisceaux de câbles et s'étend dans une zone correspondant à la plaque horizontale (204d).

10. Ensemble CCS selon la revendication 9, **caractérisé en ce qu'**il comprend en outre des attaches de câbles (209) destinées à maintenir les faisceaux de câbles de collecte (205) dans la zone correspondant à la plaque horizontale (204d),
dans lequel la face inférieure de la plaque horizontale (204d) est pourvue d'une pluralité de saillies de limitation (215) disposées par groupes de deux, l'espace entre chaque paire de saillies de limitation (215) définissant une rainure de limitation configurée pour retenir l'une des attaches de câbles (209), et ladite attache de câbles (209) étant logé dans ladite rainure de limitation ; et
La plaque horizontale (204d) est pourvue de premiers trous de fixation (2130) qui traversent chacun la plaque horizontale (204d) et sont chacun conçus pour accueillir l'une des attaches de câbles (209).

11. Ensemble CCS selon la revendication 9, **caractérisé en ce qu'**il comprend en outre des attaches de câbles (209) et des boucles de fixation, qui sont toutes conçues pour fixer le faisceau de câbles de collecte (205) dans la zone correspondant à la plaque horizontale (204d),
dans lequel chacune des boucles de fixation comprend deux boucles de fixation (208) disposées de manière correspondante, dont l'une est disposée sur la plaque horizontale (204d) et l'autre sur la plaque horizontale (204d) ou sur la plaque longitudinale (204c) ;
les deux boucles de fixation (208) comportent, entre elles, l'un des faisceaux de câbles de collecte (205) ;
chacune des boucles de fixation (208) comprend une base (2081) et un deuxième trou de fixation (2082) traverse la base (2081) et est conçu pour s'enfiler sur l'une des attaches de câbles (209) ; et
La plaque horizontale (204d) est pourvue d'orifices de formage (216) qui traversent chacun la plaque horizontale (204d) et correspondent chacun à l'une des boucles de fixation (208).

12. Ensemble CCS selon l'une quelconque des revendications 1 à 5 et 8 à 11, **caractérisé en ce que** des bandes de serrage de câbles (2045) sont prévues au niveau de chacune des rainures (2041) pour faisceaux de câbles ;
les faisceaux de câbles (205) sont situés entre le fond des rainures (2041) pour faisceaux de câbles et les bandes de serrage de câbles (2045) ; et
Les faisceaux de câbles de collecte (205) comprennent une pluralité de câbles individuels de regroupement (2051) ; chacune des bandes de serrage de câbles (2045) est pourvue d'une rainure traversante (2046) conçue pour permettre aux câbles individuels de regroupement (2051) de pénétrer dans les rainures (2041) pour faisceaux de câbles.

13. Ensemble CCS selon la revendication 12, **caractérisé en ce que** la direction longitudinale de la rainure traversante (2046) et la direction d'extension de chacune des rainures pour faisceaux de câbles (2041) forment un angle inclus ; et
l'angle formé entre la direction longitudinale de la rainure traversante (2046) et la direction d'extension de chacune des rainures pour faisceaux de câbles (2041) est compris entre 10° et 80°.

14. Bloc-batterie, **caractérisé en ce qu'**il comprend l'ensemble CCS (200) selon l'une quelconque des revendications 1 à 13.
